# EUROPEAN PATENT SPECIFICATION

(11) **EP 0 344 774 B1**
(45) Date of publication and mention of the grant of the patent: **01.09.1993**
(21) Application number: 89109934.3
(22) Date of filing: 01.06.1989
(51) Int. Cl.: H04N 9/79, H04N 9/76, H04N 5/445

(54) **Video signal processing apparatus having function for coloring additional image information**
Videosignal-Verarbeitungsgerät mit der Funktion der Färbung zusätzlicher Bildinformation
Appareil de traitement d'un signal vidéo pour colorer l'information d'image additionnelle

(30) Priority: 01.06.1988 JP 132617/88
(43) Date of publication of application: 06.12.1989
(73) Proprietor: KABUSHIKI KAISHA TOSHIBA, Kawasaki-shi, Kanagawa-ken 210 (JP)
(72) Inventor: Itou, Yuuzi c/o Intellectual Property Division, Minato-ku Tokyo 105 (JP)
(74) Representative: Lehn, Werner, Dipl.-Ing.

(56) References cited:
- US-A- 4 405 946
- US-A- 4 639 768
- US-A- 4 665 438
- US-A- 4 811 085

## Description

This invention generally relates to a video signal processing apparatus and, more particularly, to a magnetic recording/reproducing apparatus for recording/reproducing a video signal, which can be suitably used for a camera built-in VTR apparatus.

Camera built-in video tape recording (reproducing) apparatuses (to be referred to VTRs hereinafter) have recently been developed. Some of these camera built-in VTRs incorporate a character signal generating circuit so as to display characters such as a title and a date on a camera EE image or a reproduced image for convenience in an actual operation. Generally, a character signal generating circuit separates horizontal and vertical sync signals from an EE video signal or a reproduction signal, obtains horizontal and vertical positions of an image by using horizontal and vertical counters, and sets a display position of character information, thereby inserting the character information in the video signal in a camera circuit.

According to a recently developed apparatus, when a character display is to be performed, characters are displayed in color or displayed in white or with a white frame.

Coloring of characters can be relatively easily performed by switching the levels of camera signal outputs corresponding to, e.g., the R, G, and B signals during a recording operation such that an output corresponding to the R signal is set at logic "1" (high level) and outputs corresponding to the G and B signals are set at logic "0" (low level). In this case, an R (red) signal is recorded at a character position.

In reproduction, edition is sometimes performed by inserting title or date information in a reproduction signal. In some camera built-in VTRs, camera circuits are turned off during reproduction in order to save power. In such an arrangement, the above-described system of inserting character information in a video signal in a camera circuit cannot be employed in a reproduction mode, although it can be employed in a recording mode.

Furthermore, in camera built-in VTRs of certain types, the R, G, and B signals cannot be easily extracted in a camera signal processing circuit. More specifically, if primary color (R, G, and B) filters are used as color filters in an imaging section, extraction of the R, G, and B signals can be easily performed. However, if filters of intermediate colors such as cyan and magenta are used, an arithmetic operation of a video signal must be performed to obtain the R, G, and B signals. In this step, coloring of character information is performed. Thereafter, the R, G, and B signals must be converted into the (R-Y), (B-Y), and (G-Y) color difference signals. In this case, in order to stabilize hues, a phase-locked loop must be added, thus complicating the system.

As described above, especially in the conventional camera built-in VTRs, no technique is available which can be suitably used to add colored character information in both recording and reproduction modes. In order to easily perform coloring of image information to be added in both recording and reproduction modes in conventional video signal processing apparatuses in general, a great change in existing video signal processing system and a complex circuit are required.

It is, therefore, an object of the present invention to provide a new and improved video signal processing apparatus having a function for coloring additional image information which can perform coloring of image information to be added, such as character information, to a video signal in a chroma signal processing circuit section with a simple arrangement.

According to one aspect of the present invention, there is provided a chroma signal processing apparatus comprising:
extracting means for extracting a burst signal included in a chroma signal to be processed;
generating means for generating a first color carrier phase-locked with the burst signal extracted by the extracting means;
modulating means for modulating the chroma signal to be processed in accordance with the burst signal extracted by the extracting means and the first color carrier generated by the generating means;
coloring means including phase shifting means for obtaining a second color carrier by shifting a phase of the first color carrier generated by the generating means, and mixing means for obtaining a coloring signal by additively mixing the second color carrier obtained by the phase shifting means with the first color carrier generated by the generating means;
additional image information generating means for generating image information to be added to the chroma signal to be processed; and
superimpose means for inserting the coloring signal output from the coloring means in the chroma signal to be processed in accordance with the image information to be added, which is generated by the additional image information generating means.

According to another aspect of the present invention, in a recording mode, an output from a phase-locked loop circuit means is utilized. The phase-locked loop circuit means extracts a burst signal of a chroma signal output from an automatic control means (ACC circuit) and generates a carrier phase-locked with the burst signal. A color information generating means generates a color information signal by additively mixing a first color carrier as an output from the phase-locked loop circuit means with a second color carrier obtained by shifting the phase of the first color carrier. The color information signal and a recording chroma signal to be supplied to the automatic color control means are respectively supplied to one and the other terminals of a switch means. The switch means is controlled by an additional information generating circuit to select the recording chroma signal or the color information signal and to insert an additional signal of, e.g., a character or a graphic pattern in part of the recording chroma signal.

According to still another aspect of the present invention, in a reproduction mode, a low-frequency chroma signal reproduced from a video head is converted into a high-frequency chroma signal having an original frequency by a frequency converting means. The converted signal is then filtered by a comb filter to remove an unnecessary component therefrom. A phase-locked loop circuit means extracts a burst signal from the high-frequency chroma signal as an output from the comb filter and detects a phase difference between the burst signal and an output from a reference oscillator. A conversion carrier used by the frequency converting means is controlled on the basis of the phase difference so as to phase-lock the burst signal with the output from the reference oscillator. A color information generating means generates a color information signal by additively mixing a first color carrier as an output from the reference oscillator with a second color carrier by shifting the phase of the first color carrier. A switch means is controlled by an additional information generating circuit to select the color information or the high-frequency chroma signal so that the color information signal from the color information generating means and the high-frequency chroma signal from the comb filter are selectively output, thereby inserting an additional signal of, e.g., a character or a graphic pattern in part of the reproduction chroma signal.

According to the above-described arrangements, by only arranging the color information generating circuit and the switch means in the color processing section, character signals and the like including color information can be obtained in both the recording and reproduction modes.

Additional objects and advantages of the invention will be set forth in the description which follows, and in part will be obvious from the description, or may be learned by practice of the invention. The objects and advantages of the invention may be realized and obtained by means of the instrumentalities and combinations particularly pointed out in the appended claims.

The accompanying drawings, which are incorporated in and constitute a part of the specification, illustrate presently preferred embodiments of the invention and, together with the general description given above and the detailed description of the preferred embodiments given below, serve to explain the principles of the invention.
Fig. 1 is a block diagram showing a recording system according to an embodiment of the present invention;
Fig. 2 is a block diagram showing a reproducing system according to an embodiment of the present invention;
Fig. 3 is a block diagram showing a luminance signal processing system according to an embodiment of the present invention;
Fig. 4 is a block diagram showing a detailed arrangement of an additional information generating circuit in Figs. 1 and 2;
Figs. 5A to 5C are views for explaining an operation of the additional information generating circuit in Fig. 4; and
Fig. 6 is a block diagram showing a detailed arrangement of a color information generating circuit in Figs. 1 and 2.

An embodiment of the present invention will be described below with reference to the accompanying drawings.

Reference will now be made in detail to the presently preferred embodiments of the invention as illustrated in the accompanying drawings, in which like reference characters designate like or corresponding parts throughout the several drawings.

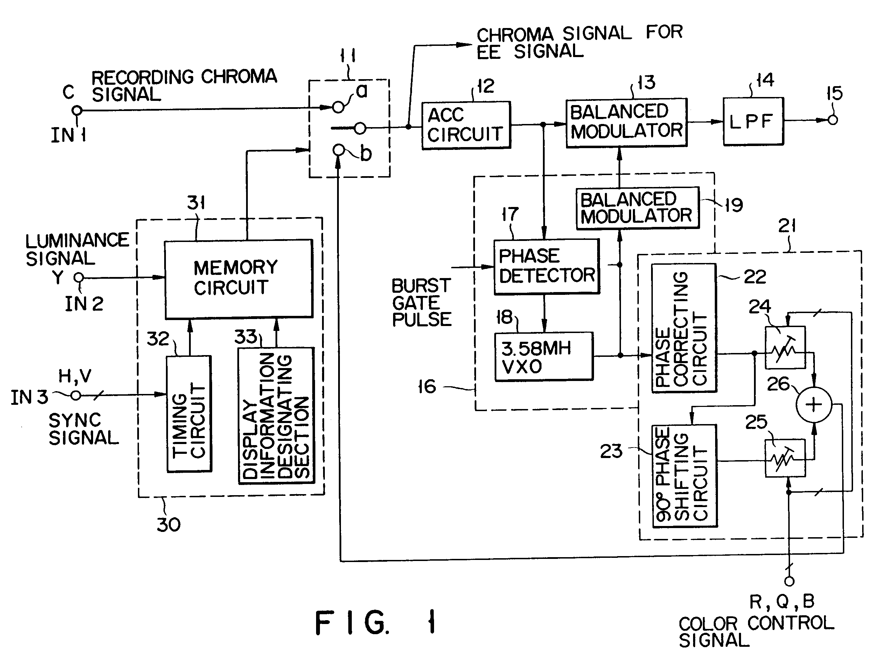

Fig. 1 shows a camera built-in magnetic recording/reproducing apparatus (VTR) in a recording mode according to the embodiment. A video signal obtained by, e.g., a camera (not shown) is supplied to a recording/reproducing section (not shown) as a camera circuit and is separated into luminance and recording chroma signals. Of these signals, the recording chroma signal input to an input terminal IN1 is supplied to one input terminal a of a switch 11. An output chroma signal from the switch 11 is supplied to an automatic color control circuit (ACC circuit) 12, and gain control is performed thereby to allow the burst signal to have a predetermined amplitude. An output chroma signal from the ACC circuit 12 is supplied to a balanced modulator 13 to be converted into a signal having a recording frequency. In this case, the 3.58 MHz chroma signal is converted into a 688 kHz low-frequency chroma signal and is supplied to a terminal 15 through a low-pass filter 14. The low-frequency converted chroma signal is mixed with an FM-modulated luminance signal by a mixing circuit (not shown), and the mixed signal is recorded on a magnetic tape through a rotary head of a VTR mechanical section (not shown).

The output from the ACC circuit 12 is supplied to a phase detector 17 of a carrier generating section 16 for generating a frequency-conversion carrier. The phase detector 17 detects a phase difference between an output from a voltage-controlled quartz oscillator (VXO) 18 for obtaining a 3.58 MHz reference oscillation output and an input burst signal, and supplies the differential voltage to the control terminal of the VXO 18. With this operation, the oscillation frequency of the VXO 18 is synchronized with the phase of the burst signal. The output from the VXO 18 is frequency-converted by a balanced modulator 19 to have a frequency of 3.58 MHz + 688 kHz and is used as a frequency-conversion carrier in the balanced modulator 13.

The oscillation output from the VXO 18 is further supplied to a color information generating circuit 21. The circuit 21 comprises a phase correcting circuit 22 for correcting the phase of an output from the VXO 18, a phase shifting circuit 23 for delaying the phase of an output from the circuit 23 by 90°, adjusters 24 and 25 for respectively adjusting the levels of outputs from the circuits 22 and 23, and an adder 26 for mixing outputs from the adjusters 24 and 25. As will be described later, the hue of output color information from the color information generating circuit 21 can be changed by changing the mixing ratio of the outputs from the adjusters 24 and 25. In addition, the output color information is supplied to the other input terminal b of the switch 11 as a coloring signal for a desired color of eight colors obtained by changing the mixing ratio of color control signals R, G, and B.

At this time, the switch 11 is controlled by a control pulse from an additional information generating circuit 30 and is switched to a recording chroma signal side or a coloring signal side. For example, during a character signal adding operation, the switch 11 is connected to the terminal b side.

The additional information generating circuit 30 comprises a memory circuit 31 for storing image data to be added, e.g., a date and a title which are written by hand and are imaged in advance by a camera section (not shown) to be supplied to an input terminal IN2 as binary data of a luminance signal of an input video signal, a timing circuit 32 for setting the read and write timings with respect to the memory circuit 31, and a display information designating section 33 for selecting specific data (a date, a title, or the like) to be read out from the data stored in the memory circuit 31. The timing circuit 32 sets a display position of image data to be added, such as characters, on a screen by using horizontal and vertical sync signals H and V of an input video signal supplied to an input terminal IN3 and an internal clock.

According to the apparatus having the above-described arrangement, a coloring signal from the color information generating circuit 21 is inserted in a recording chroma signal so as to partially replace it and to color image data to be added and is supplied to the ACC circuit 12 at the same timing as that of output of the image data to be added, such as title characters and the like read out from the memory circuit 31. When a tape on which such a composite signal is recorded is reproduced, an image in which a desired color is added to a character portion such as a date or a title can be obtained.

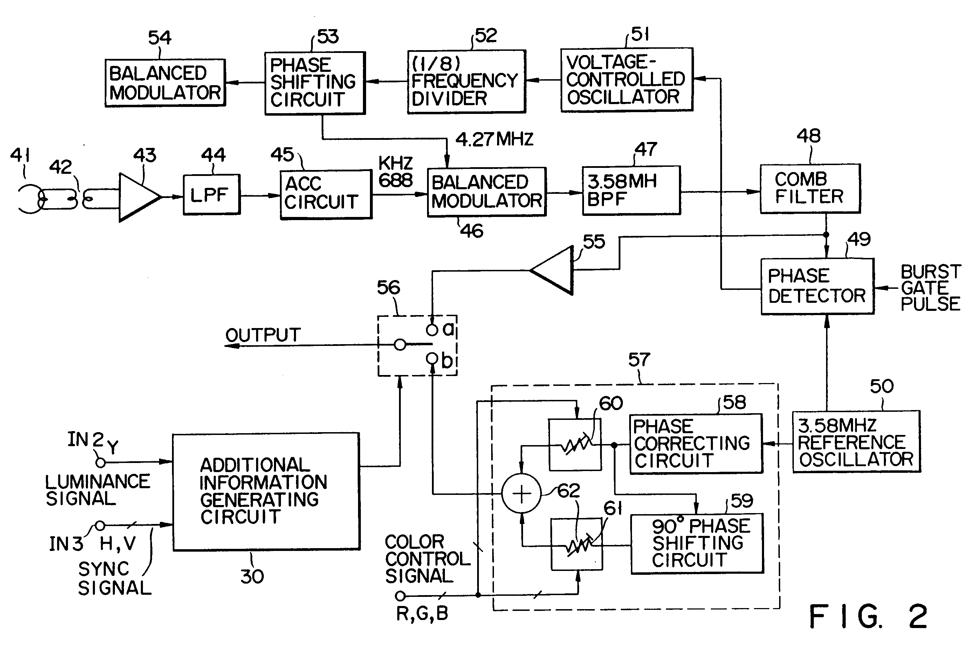

Fig. 2 shows an embodiment in which the present invention is applied to a reproducing system of a magnetic recording/reproducing apparatus. When edition or the like is to be performed in a VTR, a title or date signal is sometimes desired to be inserted in a reproduction video signal. In such a case, when a title or a date is to be displayed, coloring is performed.

In Fig. 2, an output from a video head 41 is supplied to a low-pass filter 44 through a rotary transformer 42. In this case, a low-frequency converted chroma signal of 688 kHz is extracted and is supplied to an automatic color control circuit (ACC circuit) 45. The low-frequency converted chroma signal which has been subjected to gain control in the ACC circuit 45 to have a predetermined burst level is supplied to a balanced modulator 46 to have the original frequency. The chroma signal whose frequency has been returned to 3.58 MHz is supplied through a band-pass filter 47 to a comb filter 48 for removing crosstalk. A reproduction chroma signal output from the comb filter 48 is supplied to one terminal a of a switch 56 through a color killer circuit 55 and at the same time is supplied to a phase detector 49.

The phase detector 49 detects a phase difference between the burst signal and a 3.58 MHz reference oscillation output. The reference oscillation output is output from a quartz oscillator 50. A differential output from the phase detector 49 is supplied to the control terminal of a voltage-controlled oscillator 51. An output from the oscillator 51 is then divided by a frequency divider 52 and is supplied to a balanced modulator 54 through a phase shifting circuit 53. The modulator 54 generates a 4.27 MHz carrier for frequency conversion and supplies it to the balanced modulator 46. A loop constituted by the phase detector 49, the voltage-controlled oscillator 51, the frequency divider 52, the phase shifting circuit 53, the balanced modulators 54 and 46, the band-pass filter 47, and the comb filter 48 serves as a phase-locked loop for phase-locking the burst signal of a reproduced chroma signal with the oscillation output phase of the reference oscillator 50.

In a normal chroma signal reproducing circuit, a chroma signal output from the color killer circuit 55 is used without any modification. In this system, however, the switch 56 and a color information generating circuit 57 are arranged. The circuit 57 uses an output from the reference oscillator 50. The circuit 57 comprises a phase correcting circuit 58, a phase shifting circuit 59, adjusters 60 and 61, and an adder 62. The color information generating circuit 57 and the reference oscillator 50 are identical with the color information generating circuit 21 and the voltage-controlled quartz oscillator 18 shown in Fig. 1, respectively. In practice, the same circuits are commonly used upon a switching operation by a switch. More specifically, the reference oscillator 50 is switched to a free oscillation state during reproduction and to serve as the oscillator 18 of a voltage-controlled type during recording.

An output from the color information generating circuit 57, i.e., a color information signal is supplied to a terminal b of the switch 56. At this time, the switch 56 is controlled by the additional information generating circuit 30 in the same manner as described with reference to Fig. 1. Consequently, the switch 56 outputs a reproduction chroma signal in which a coloring signal from the circuit 57 is inserted to partially replace it and to color image data to be added, such as characters, a title, or the like.

According to the above-described system, most of the circuits are identical with those used in the chroma signal processing circuit of the magnetic recording/reproducing apparatus. Only the color information generating circuit 57 and the switch 56 are newly added, and moreover, the circuit 57 can also serve as the circuit 21 in the recording system. Therefore, coloring information can be superposed on image data to be added by using a simple arrangement without increasing the cost. In addition, since the adjusters 60 and 61 are arranged in the color information generating circuit 57 so as to respectively adjust outputs from the circuits 58 and 59, the color of characters or the like to be displayed can be adjusted to be easily seen in accordance with a background color.

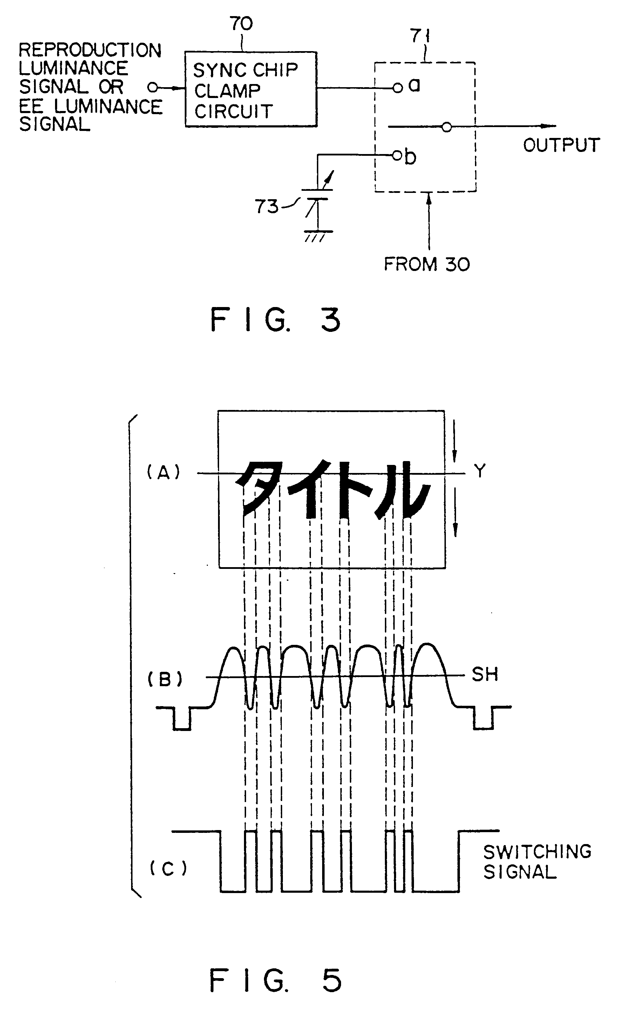

Fig. 3 shows a circuit for replacing the position at which a character signal or the like is superposed on a luminance signal in the path of the luminance signal with a predetermined DC level. A reproduction luminance signal or an EE luminance signal from a camera is input to one input terminal a of a switch 71 through a sync chip clamp circuit 70. A DC voltage is applied from a DC voltage source to the other input terminal b. The switch 71 is controlled by an output from the additional information generating circuit 30 described with reference to Figs. 1 and 2 so that a character display position is set to a predetermined DC level.

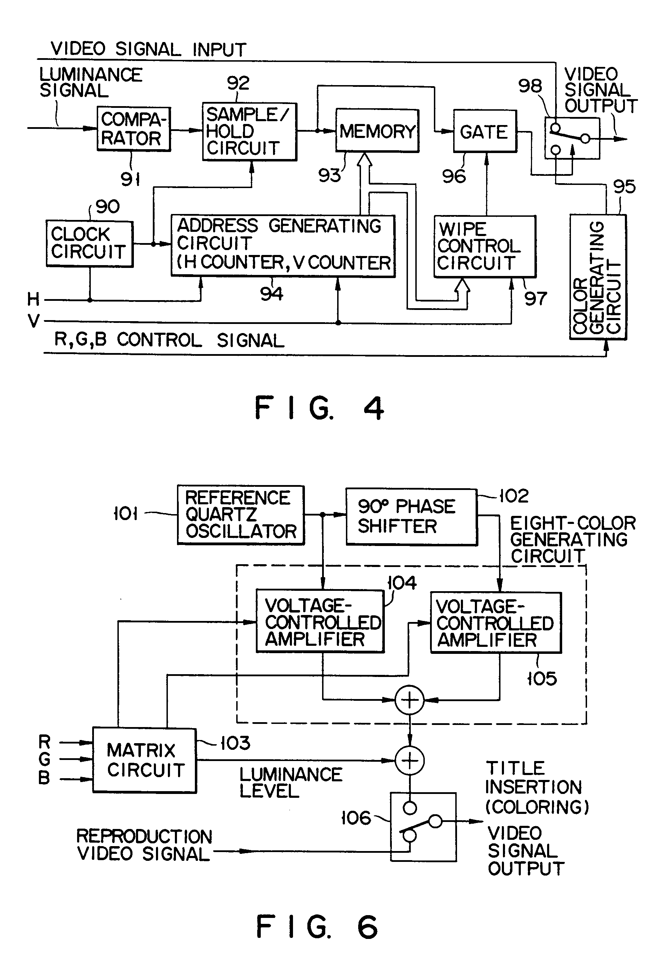

Fig. 4 is a block diagram showing a so-called digital superimpose circuit as a practical example of the additional information generating circuit in Figs. 1 and 2.

Digital superimpose is a function for storing a luminance signal of a title image, which has been obtained by a camera section in advance, as digital data obtained by converting the signal into two gray levels of white and black in a memory (RAM), and reading out this digital data (the title image) from the memory to superpose it on a recorded or reproduced image. According to a characteristic feature of the embodiments, a desired color selected from eight colors is given to the title (character) portion during this superimpose operation.

Fig. 5B shows a luminance signal in a horizontal period of a video signal obtained by imaging a title image shown in Fig. 5A (in which Japanese characters equivalent to the word "title" is drawn in katakanas. This luminance signal is compared by a comparator 91 with a threshold level denoted by reference symbol SH for each horizontal line so as to be converted into binary data shown in Fig. 5C. The binary data has portions respectively with levels higher and lower than the level SH as white and black. In order to decompose a single frame to be stored into 256 horizontal dots and 256 vertical dots, this data is sampled by a sample/hold circuit 92 and is stored in a memory 93 as data in which "0" and "1" respectively represent white and black.

The above sampling is performed by using a clock signal having a frequency of about 4 MHz and synchronized with a horizontal sync signal H generated by a clock circuit 90. An address to the memory 93 is generated by an address generating circuit 94 including H and V counters.

When the data stored in the memory 93 is to be superimposed on a screen image, the data in the memory 93 is read out in synchronizm with the horizontal and vertical sync signals H and V. A switch 98 is controlled by the readout data. When data is "1", the signal of the screen image is replaced with a desired coloring signal generated upon designation by a color generating circuit 95 (corresponding to the color information generating circuits 21 and 57). When the data is "0", the signal of the screen image is directly output.

Note that a gate circuit 96 in Fig. 4 is used to generate various timing signals for superimpose and is constituted by a CMOS gate array. In addition, a wipe control circuit 97 is used when a title image to be superimposed is wiped on the screen.

Fig. 6 is a block diagram showing a title color adding circuit to be used during reproduction as a practical example of the color information generating circuits 21 and 57 in Figs. 1 and 2 (corresponding to the color generating circuit 95).

A carrier chroma signal is obtained by mixing an output signal from a reference quartz oscillator 101 with a signal obtained by shifting the phase of the output signal by 90° using a phase shifter 102, and the hue can be changed by changing the mixing ratio. Color control signals R, G, and B from the digital superimpose circuit section in Fig. 4 are respectively converted into voltages by a matrix circuit 103. The above mixing ratio is changed by controlling first and second voltage-controlled amplifiers 104 and 105, to which the carrier chroma signals whose phases are different from each other by 90° are supplied, by using the converted voltages, thereby generating eight (white, yellow, cyan, green, magenta, red, blue, and black) chroma signals. By setting luminance levels corresponding to the respective colors, desired coloring signals can be obtained. The above-described superimpose is performed by replacing a video signal with a colored title signal obtained in this manner by a switch 106.

As has been described above, according to the present invention, coloring of image data such as character information to be added to a video signal can be realized in the chroma signal processing circuit with a simple arrangement.

## Claims

1. A chroma signal processing apparatus comprising:
extracting means (12) for extracting a burst signal included in a chroma signal to be processed;
generating means (16) for generating a first color carrier phase-locked with the burst signal extracted by said extracting means (12); and
modulating means (13) for modulating the chroma signal to be processed in accordance with the burst signal extracted by said extracting means (12) and the first color carrier generated by said generating means (16);
characterized in that said apparatus further comprises:
coloring means (21) including phase shifting means (23) for obtaining a second color carrier by shifting a phase of the first color carrier generated by said generating means (16), and mixing means (26) for obtaining a coloring signal by additively mixing the second color carrier obtained by said phase shifting means (23) with the first color carrier generated by said generating means (16);
additional image information generating means (30) for generating image information to be added to the chroma signal to be processed; and
superimpose means (11) for inserting the coloring signal output from said coloring means (21) in the chroma signal to be processed in accordance with the image information to be added, which is generated by said additional image information generating means (30).

2. An apparatus according to claim 1,
characterized in that said extracting means (12) includes automatic color control means (12) for controlling a level of the burst signal included in a recording chroma signal to be processed.

3. An apparatus according to claim 2,
characterized in that said generating means (16) includes phase-locked loop means (16) for generating the first color carrier phase-locked with the burst signal.

4. An apparatus according to claim 3,
characterized in that said phase-locked loop means (16) includes a voltage-controlled variable oscillator (18) for obtaining a reference oscillation output corresponding to a color subcarrier frequency and a phase detector (17) for detecting a phase difference between the reference oscillation output from said voltage-controlled variable oscillator (18) and the burst signal, the first color carrier being output from said voltage-controlled variable oscillator (18) by controlling said voltage-controlled variable oscillator (18) using a voltage corresponding to the phase difference detected by said phase detector (17).

5. An apparatus according to claim 4,
characterized in that said modulating means (13) includes carrier modulating means (19) for performing balanced modulation of the first color carrier and converting the recording chroma signal to be processed into a signal having a low frequency.

6. An apparatus according to claim 1,
characterized in that said coloring means (21) includes a circuit (22) for correcting a phase of the first color carrier.

7. An apparatus according to claim 1,
characterized in that said coloring means (21) includes first and second adjusters (24, 25) for respectively adjusting levels of the first and second color carriers, said first and second adjusters (24, 25) outputting a desired coloring signal by controlling a mixing ratio of the first and second color carriers in accordance with a color control signal.

8. An apparatus according to claim 1,
characterized in that said additional image information generating means (30) includes a memory (31) for storing the image information to be added and a timing circuit (32) for setting write and read timings with respect to said memory (31).

9. An apparatus according to claim 8,
characterized in that said memory (31) stores binary data of a luminance signal included in a video signal as the image information to be added.

10. An apparatus according to claim 1,
characterized in that said superimpose means (11) includes means (11) for switching the chroma signal to be processed and the coloring signal in accordance with the image information to be processed.

11. An apparatus according to claim 1,
characterized in that said modulating means includes frequency converting means (46, 47, 51-54) for converting a low-frequency chroma signal reproduced from a video head (41) into a high-frequency chroma signal having an original frequency, and said extracting means includes filter means (48) for removing an unnecessary component of the high-frequency chroma signal from said frequency converting means (46, 47, 51-54) and means (49) for extracting the burst signal from the high-frequency chroma signal from said filter means (48).

12. An apparatus according to claim 11,
characterized in that said generating means includes a reference oscillator (50) for obtaining a reference oscillation output corresponding to a color subcarrier frequency and a phase detector (49) for detecting a phase difference between the reference oscillation output from said reference oscillator (50) and the burst signal, and comprises a phase-locked loop circuit for phase-locking the burst signal with the reference oscillation output from said reference oscillator (50) by controlling a conversion carrier used in said frequency converting means (46, 47, 51-54) in accordance with a phase difference output from said reference oscillator (50).

13. An apparatus according to claim 12,
characterized in that said coloring means receives an output from said reference oscillator (50) as the first color carrier.

14. An apparatus according to claim 13,
characterized in that said superimpose means receives the high-frequency chroma signal from said filter means (48) as the chroma signal to be processed.

15. A video recording apparatus comprising:
automatic color control means (12) for receiving a chroma signal included in a recording video signal and controlling a gain of the chroma signal so as to set a burst signal thereof to a predetermined level;
phase-locked loop circuit means (16) for extracting the burst signal of a chroma signal output from said automatic color control means (12) and generating a carrier phase-locked with the burst signal; and
carrier modulating means (13) for performing balanced modulation of the output carrier from said phase-locked loop circuit means (16) and generating a carrier for converting the chroma signal from said automatic color control means (12) into a low-frequency chroma signal;
characterized in that said apparatus further comprises:
color information generating means (21) for generating a color information signal by additively mixing a first color carrier output from said phase-locked loop circuit means (16) with a second color carrier obtained by shifting a phase of the first color carrier;
switch means (11) for selectively supplying the color information signal from said color information generating means (21) and the recording color signal to said automatic chroma control means (12); and
an additional information generating circuit (30) for controlling said switch means (11) to select the recording chroma signal or the color information signal and insert an additional signal, of e.g., a character or a graphic pattern in part of the recording chroma signal.

16. A video reproducing apparatus comprising:
frequency converting means (46, 47, 51-54) for converting a low-frequency converted chroma signal reproduced from a video head (41) into a high-frequency chroma signal having an original frequency;
a comb filter (48) for removing an unnecessary component of the high-frequency chroma signal from said frequency converting means (46, 47, 51-54);
phase-locked loop circuit means (49, 50, 51) for extracting a burst signal from the high-frequency chroma signal from said comb filter (48) to detect a phase difference between the burst signal and an output from a reference oscillator (50) and phase-locking the burst signal with the output from said reference oscillator by controlling a conversion carrier used in said frequency converting means (46, 47, 51-54) on the basis of the phase difference;
characterized in that said apparatus further comprises:
color information generating means (57) for generating a color information signal by additively mixing a first color carrier as an output from said reference oscillator (50) with a second color carrier obtained by shifting a phase of the first color carrier;
switch means (56) for selectively outputting the color information signal from said color information generating means (57) and the high-frequency chroma signal from said comb filter (48) as a reproduction chroma signal; and
an additional information generating circuit (30) for controlling said switch means (56) to select the color information signal or the high-frequency chroma signal and insert an additional signal of, e.g., a character or a graphic pattern in part of the reproduction chroma signal.

## Patentansprüche

1. Farbträgersignalverarbeitungsgerät, umfassend:
eine Auskopplungseinrichtung (12) zum Auskoppeln eines Farbsynchronsignals, das in einem zu verarbeitenden Farbträgersignal enthalten ist;
eine Erzeugungseinrichtung (16) zum Erzeugen eines ersten Farbträgers, der mit dem durch die Auskopplungseinrichtung (12) ausgekoppelten Farbsynchronsignal phasenverriegelt ist; und
eine Modulationseinrichtung (13) zum Modulieren des zu verarbeitenden Farbträgersignals entsprechend dem durch die Auskopplungseinrichtung (12) ausgekoppelten Farbsynchronsignals und dem durch die Erzeugungseinrichtung (16) erzeugten ersten Farbträger;
dadurch **gekennzeichnet,** daß das Gerät weiter umfaßt:
eine Farbgebungseinrichtung (21), mit einer Phasenverschiebungseinrichtung (23) zur Gewinnung eines zweiten Farbträgers durch Schieben der Phase des durch die Erzeugungseinrichtung (16) erzeugten ersten Farbträgers, und mit einer Mischeinrichtung (26) zur Erzielung eines Farbgebungssignals durch additives Mischen des durch die Phasenverschiebungseinrichtung (23) gewonnenen zweiten Farbträgers mit dem durch die Erzeugungseinrichtung (16) erzeugten ersten Farbträger;
eine Zusatzbildinformationserzeugungseinrichtung (30) zur Erzeugung von Bildinformationen, die dem zu verarbeitenden Farbträgersignal hinzuzufügen sind; und
eine Einkopiereinrichtung (11) zum Einfügen der Farbgebungssignalausgabe der Farbgebungseinrichtung (21) in das zu verarbeitende Farbträgersignal gemäß der hinzuzufügenden Bildinformation, die von der zusätzlichen Bildinformationserzeugungseinrichtung (30) erzeugt wird.

2. Gerät nach Anspruch 1, dadurch gekennzeichnet, daß die Auskopplungseinrichtung (12) eine automatische Farbsteuereinrichtung (12) zur Steuerung des Pegels des in einem zu verarbeitenden Aufnahmefarbträgersignals enthaltenen Farbsynchronsignals umfaßt.

3. Gerät nach Anspruch 2, dadurch gekennzeichnet, daß die Erzeugungseinrichtung (16) eine phasenverriegelte Einrichtung (16) zur Erzeugung des mit dem Farbsynchronsignal phasenverriegelten ersten Farbträgers umfaßt.

4. Gerät nach Anspruch 3, dadurch gekennzeichnet, daß die phasenverriegelte Einrichtung (16) einen variablen, spannungsgesteuerten Oszillator (18) zur Gewinnung einer Bezugsschwingungsausgabe entsprechend einer Farbhilfsträgerfrequenz, und einen Phasendetektor (17) umfaßt, der zur Erfassung eines Phasenunterschiedes zwischen der Bezugsschwingungsausgabe des variablen, spannungsgesteuerten Oszillators (18) und dem Farbsynchronsignal dient, wobei der erste Farbträger vom variablen, spannungsgesteuerten Oszillator (18) durch Steuern des variablen, spannungsgesteuerten Oszillators (18) durch eine Spannung ausgegeben wird, die dem vom Phasendetektor (17) erfaßten Phasenunterschied entspricht.

5. Gerät nach Anspruch 4, dadurch gekennzeichnet, daß die Modulationseinrichtung (13) Trägermodulationseinrichtungen (19) aufweist, die zur Durchführung einer symmetrischen Modulation des ersten Farbträgers, und zum Umwandeln des zu verarbeitenden Aufnahmefarbträgersignals in ein Signal niedriger Frequenz dienen.

6. Gerät nach Anspruch 1, dadurch gekennzeichnet, daß die Farbgebungseinrichtung (21) eine Schaltung (22) zum Korrigieren der Phase des ersten Farbträgers umfaßt.

7. Gerät nach Anspruch 1, dadurch gekennzeichnet, daß die Farbgebungseinrichtung (21) erste und zweite Einsteller (24, 25) zum jeweiligen Justieren der Pegel der ersten und zweiten Farbträger umfaßt, wobei die ersten und zweiten Einsteller (24, 25) ein gewünschtes Farbgebungssignal durch Steuern des Mischverhältnisses der ersten und zweiten Farbträger gemäß einem Farbsteuersignal ausgeben.

8. Gerät nach Anspruch 1, dadurch gekennzeichnet, daß die zusätzliche Bildinformationserzeugungseinrichtung (30) einen Speicher (31) zum Speichern der hinzuzufügenden Bildinformation und eine Zeitgabeschaltung (32) zum Setzen der Schreib- und Lesezeitgaben in bezug auf den Speicher (31) umfaßt.

9. Gerät nach Anspruch 1, dadurch gekennzeichnet, daß der Speicher (31) binäre Daten eines Helligkeitssignals speichern, das als hinzuzufügende Bildinformation in einem Videosignal enthalten ist.

10. Gerät nach Anspruch 1, dadurch gekennzeichnet, daß die Überlagerungseinrichtung (11) Einrichtungen (11) zum Umschalten des zu verarbeitenden Farbträgersignals und des Farbgebungssignals entsprechend der zu verarbeitenden Bildinformation umfaßt.

11. Gerät nach Anspruch 1, dadurch gekennzeichnet, daß die Modulationseinrichtung Frequenzwandungseinrichtungen (46, 47, 51 - 54) zum Umwandeln eines von einem Videokopf (41) reproduzierten niederfrequenten Farbträgersignals in ein hochfrequentes Farbträgersignal mit Ursprungsfrequenz aufweist; und daß die Auskopplungseinrichtung Filtereinrichtungen (48) zum Beseitigen einer überflüssigen Komponente des von den Frequenzumsetzungseinrichtungen (46, 47, 51 - 54) gelieferten hochfrequenten Farbträgersignals, und eine Einrichtung (49) zum Auskoppeln des Farbsynchronsignals aus dem von der Filtereinrichtung (48) gelieferten hochfrequenten Farbträgersignal umfaßt.

12. Gerät nach Anspruch 11, dadurch gekennzeichnet, daß die Erzeugungseinrichtung einen Bezugsoszillator (50) zur Gewinnung einer Bezugsschwingungsausgabe entsprechend einer Farbhilfsträgerfrequenz, und einen Phasendetektor (49) zur Erfassung eines Phasenunterschiedes zwischen der von dem Bezugsoszillator (50) gelieferten Bezugsschwingungsausgabe und dem Farbsynchronsignal umfaßt; und daß sie eine phasenverriegelte Schleifenschaltung aufweist, die zur Phasenverriegelung des Farbsynchronsignals mit der vom Bezugsoszillator (50) gelieferten Bezugsschwingungsausgabe durch Steuern eines in den Frequenzumwandlungseinrichtungen (46, 47, 51 - 54) benutzten Umwandlungsträgers entsprechend dem vom Bezugsoszillator (50) ausgegebenen Phasenunterschied dient.

13. Gerät nach Anspruch 12, dadurch gekennzeichnet, daß die Farbgebungseinrichtung ein Ausgangssignal des Bezugsoszillators (50) als den ersten Farbträger empfängt.

14. Gerät nach Anspruch 13, dadurch gekennzeichnet, daß die Überlagerungseinrichtung das von der Filtereinrichtung (48) gelieferte hochfrequente Farbträgersignal als das zu verarbeitende Farbträgersignal empfängt.

15. Videoaufnahmegerät, aufweisend:
eine automatische Farbsteuereinrichtung (12) zum Empfangen eines in einem Aufnahmevideosignal enthaltenen Farbträgersignals, und zum Steuern der Verstärkung des Farbträgersignals, derart, daß davon ein Farbsynchronsignal auf einen vorbestimmten Pegel eingestellt wird;
eine phasenverriegelte Schleifenschaltungseinrichtung (16) zum Auskoppeln des Farbsynchronsignals aus dem von der automatischen Farbsteuereinrichtung (12) ausgegebenen Farbträgersignal, und zum Erzeugen eines mit dem Farbsychronsignal phasenverriegelten Trägers; und
eine Trägermodulationseinrichtung (13) zur Durchführung einer symmetrischen Modulation des von der phasenverriegelten Schleifenschaltungseinrichtung (16) ausgegebenen Trägers, und zum Erzeugen eines Trägers zum Umwandeln des von der automatischen Farbsteuereinrichtung (12) gelieferten Farbsynchronsignals in ein niederfrequentes Farbsynchronsignal;
dadurch **gekennzeichnet,** daß das Gerät weiter umfaßt:
eine Farbinformationserzeugungseinrichtung (21) zum Erzeugen eines Farbinformationssignals durch additives Mischen eines ersten, von der phasenverriegelten Schleifenschaltungseinrichtung (16) ausgegebenen Farbträgers mit einem zweiten Farbträger, der durch Schieben der Phase des ersten Farbträgers gewonnen wurde;
eine Schalteinrichtung (11) zum selektiven Liefern des von der Farbinformationserzeugungseinrichtung (21) ausgegebenen Farbinformationssignal, und des Aufnahmefarbsignals an die automatische Farbträgersteuereinrichtung (12); und
eine Zusatzinformationserzeugungsschaltung (30) zum Steuern der Schalteinrichtung (11) in der Weise, daß diese das Aufnahmefarbträgersignal oder das Farbinformationssignal wählt und ein zusätzliches Signal von beispielsweise einem Zeichen oder einem graphischen Muster in einen Teil des Aufnahmefarbträgersignals einfügt.

16. Videowiedergabegerät, umfassend:
Frequenzumwandlungseinrichtungen (46, 47, 51 - 54) zum Umwandeln eines von einem Videokopf (41) reproduzierten niederfrequenten, umgewandelten Farbträgersignals in ein hochfrequentes Farbträgersignal mit Ursprungsfrequenz;
ein Kammfilter (48) zum Beseitigen einer überflüssigen Komponente des von den Frequenzumsetzungseinrichtungen (46, 47, 51 - 54) gelieferten hochfrequenten Farbträgersignals;
phasenverriegelte Schleifenschaltungseinrichtungen (49, 50, 51) zum Auskoppeln eines Farbsynchronsignals aus dem vom Kammfilter (48) gelieferten hochfrequenten Farbträgersignal, um den Phasenunterschied zwischen dem Farbsynchronsignal und einem vom Bezugszoszillator (50) gelieferten Ausgabesignal zu erfassen; und zum Phasenverriegeln des Farbsynchronsignals mit dem vom Bezugsoszillator gelieferten Ausgabesignal durch Steuern eines in den Frequenzumsetzungseinrichtungen (46, 47, 51 - 54) benutzten Umwandlungsträgers aufgrund des Phasenunterschiedes;
dadurch **gekennzeichnet,** daß das Gerät weiter umfaßt:
eine Farbinformationserzeugungseinrichtung (57) zur Erzeugung eines Farbinformationssignals durch additives Mischen eines ersten Farbträgers als Ausgabe des Bezugsoszillators (50) mit einem zweiten Farbträger, der durch Schieben der Phase des ersten Farbträgers gewonnen wurde;
eine Schalteinrichtung (56) zum selektiven Ausgeben des von der Farbinformationserzeugungseinrichtung (57) gelieferten Farbinformationssignals und des vom Kammfilter (48) gelieferten hochfrequenten Farbträgersignals als Wiedergabefarbträgersignal; und
eine Zusatzinformationserzeugungsschaltung (30) zum Steuern der Schalteinrichtung (56), damit sie das Farbinformationssignal oder das hochfrequente Farbträgersignal wählt und ein zusätzliches Signal von beispielsweise einem Zeichen oder einem graphischen Muster in einen Teil des Wiedergabefarbträgersignals eingibt.

## Revendications

1. Appareil de traitement de signal de chrominance comprenant :
un moyen d'extraction (12) pour extraire un signal de burst inclus dans un signal de chrominance qui doit être traité ;
un moyen de génération (16) pour générer une première porteuse couleur verrouillée en phase avec le signal de burst extrait par ledit moyen d'extraction (12) ; et
un moyen de modulation (13) pour moduler le signal de chrominance qui doit être traité en relation avec le signal de burst extrait par ledit moyen d'extraction (12) et avec la première porteuse couleur générée par ledit moyen de génération (16) ;
caractérisé en ce que ledit appareil comprend en outre :
un moyen de coloration (21) incluant un moyen de déphasage (23) pour obtenir une seconde porteuse couleur en déphasant la première porteuse couleur générée par ledit moyen de génération (16) et un moyen mélangeur (26) permettant d'obtenir un signal de coloration en mélangeant de façon additive la seconde porteuse couleur obtenue par ledit moyen de déphasage (23) à la première porteuse couleur générée par ledit moyen de génération (16) ;
un moyen de génération d'information d'image supplémentaire (30) pour générer une information d'image qui doit être ajoutée au signal de chrominance qui doit être traité ; et
un moyen de superposition (11) pour insérer la sortie de signal de coloration en provenance dudit moyen de coloration (21) dans le signal de chrominance qui doit être traité en relation avec l'information d'image qui doit être ajoutée, laquelle est générée par ledit moyen de génération d'information d'image supplémentaire (30).

2. Appareil selon la revendication 1 caractérisé en ce que ledit moyen d'extraction (12) inclut un moyen de contrôle automatique de couleur (12) pour contrôler un niveau du signal de burst inclus dans un signal de chrominance d'enregistrement qui doit être traité.

3. Appareil selon la revendication 2, caractérisé en ce que ledit moyen de génération (16) inclut un moyen de boucle à verrouillage de phase (16) pour générer la première porteuse couleur verrouillée en phase avec le signal de burst.

4. Appareil selon la revendication 3, caractérisé en ce que ledit moyen de boucle à verrouillage de phase (16) inclut un oscillateur variable commandé en tension (18) pour obtenir une sortie d'oscillation de référence correspondant à une fréquence de sous-porteuse couleur et un détecteur de phase (17) pour détecter une différence de phase entre la sortie d'oscillation de référence en provenance dudit oscillateur variable commandé en tension (18) et le signal de burst, la première porteuse couleur étant émise en sortie depuis ledit oscillateur variable commandé en tension (18) en commandant ledit oscillateur variable commandé en tension (18) en utilisant une tension correspondant à la différence de phase détectée par ledit détecteur de phase (17).

5. Appareil selon la revendication 4, caractérisé en ce que ledit moyen de modulation (13) inclut un moyen de modulation de porteuse (19) pour réaliser une modulation symétrique de la première porteuse couleur et pour convertir le signal de chrominance d'enregistrement qui doit être traité en un signal présentant une fréquence faible.

6. Appareil selon la revendication 1, caractérisé en ce que ledit moyen de coloration (21) inclut un circuit (22) pour corriger une phase de la première porteuse couleur.

7. Appareil selon la revendication 1, caractérisé en ce que ledit moyen de coloration (21) inclut des premier et second dispositifs de réglage (24, 25) pour respectivement régler des niveaux des première et seconde porteuses couleur, lesdits premier et second dispositifs de réglage (24, 25) émettant en sortie un signal de la coloration souhaitée en commandant un rapport de mélange des première et seconde porteuses de couleur en relation avec un signal de commande de couleur.

8. Appareil selon la revendication 1, caractérisé en ce que ledit moyen de génération d'information d'image supplémentaire (30) inclut une mémoire (31) pour stocker l'information d'image qui doit être ajoutée et un circuit de cadencement (32) pour établir les cadencements d'écriture et de lecture par rapport à ladite mémoire (31).

9. Appareil selon la revendication 8, caractérisé en ce que ladite mémoire (31) stocke des données binaires d'un signal de luminance inclus dans un signal vidéo en tant qu'information d'image qui doit être ajoutée.

10. Appareil selon la revendication 1, caractérisé en ce que ledit moyen de superposition (11) inclut un moyen (11) pour commuter le signal de chrominance qui doit être traité et le signal de coloration en relation avec l'information d'image qui doit être traitée.

11. Appareil selon la revendication 1, caractérisé en ce que ledit moyen de modulation inclut un moyen de conversion de fréquence (46, 47, 51-54) pour convertir un signal de chrominance basse fréquence reproduit à partir d'une tête vidéo (41) en un signal de chrominance haute fréquence présentant une fréquence originale et ledit moyen d'extraction inclut un moyen de filtre (48) pour ôter une composante non nécessaire du signal de chrominance haute fréquence en provenance dudit moyen de conversion de fréquence (46, 47, 51-54) et un moyen (49) pour extraire le signal de burst du signal de chrominance haute fréquence en provenance dudit moyen de filtre (48).

12. Appareil selon la revendication 11, caractérisé en ce que ledit moyen de génération inclut un oscillateur de référence (50) pour obtenir une sortie d'oscillation de référence correspondant à une fréquence de sous-porteuse couleur et un détecteur de phase (49) pour détecter une différence de phase entre la sortie d'oscillation de référence en provenance dudit oscillateur de référence (50) et le signal de burst, et il comprend un circuit de boucle à verrouillage de phase pour verrouiller en phase le signal de burst avec la sortie d'oscillation de référence en provenance dudit oscillateur de référence (50) en commandant une porteuse de conversion utilisée dans ledit moyen de conversion de fréquence (46, 47, 51-54) en relation avec une sortie de différence de phase en provenance dudit oscillateur de référence (50).

13. Appareil selon la revendication 12, caractérisé en ce que ledit moyen de coloration reçoit une sortie en provenance dudit oscillateur de référence (50) en tant que première porteuse couleur.

14. Appareil selon la revendication 13, caractérisé en ce que ledit moyen de superposition reçoit le signal de chrominance haute fréquence en provenance dudit moyen de filtre (48) en tant que signal de chrominance qui doit être traité.

15. Appareil d'enregistrement vidéo comprenant :
un moyen de contrôle automatique de couleur (12) pour recevoir un signal de chrominance inclus dans un signal vidéo d'enregistrement et pour contrôler un gain du signal de chrominance de manière à établir un signal de burst de celui-ci à un niveau prédéterminé ;
un moyen de circuit de boucle à verrouillage de phase (16) pour extraire le signal de burst d'une sortie du signal de chrominance en provenance dudit moyen de contrôle automatique de couleur (12) et pour générer une porteuse verrouillée en phase avec le signal de burst ; et
un moyen de modulation de porteuse (13) pour réaliser une modulation symétrique de la porteuse de sortie en provenance dudit moyen de circuit de boucle à verrouillage de phase (16) et pour générer une porteuse pour convertir le signal de chrominance en provenance dudit moyen de contrôle automatique de couleur (12) en un signal de chrominance basse fréquence ;
caractérisé en ce que ledit appareil comprend en outre :
un moyen de génération d'information couleur (21) pour générer un signal d'information couleur en mélangeant de façon additive une première sortie de porteuse de couleur en provenance dudit moyen de circuit de boucle à verrouillage de phase (16) à une seconde porteuse de couleur obtenue en déphasant la première porteuse de couleur ;
un moyen de commutation (11) pour appliquer de façon sélective le signal d'information couleur en provenance dudit moyen de génération d'information couleur (21) et le signal de couleur d'enregistrement audit moyen de contrôle automatique de chrominance (12) ; et
un circuit de génération d'information supplémentaire (30) pour commander ledit moyen de commutation (11) afin de sélectionner le signal de chrominance d'enregistrement ou le signal d'information couleur et afin d'insérer un signal supplémentaire de par exemple un caractère ou un motif graphique dans une partie du signal de chrominance d'enregistrement.

16. Appareil d'enregistrement vidéo comprenant :
un moyen de conversion en fréquence (46, 47, 51-54) pour convertir un signal de chrominance converti basse fréquence reproduit à partir d'une tête vidéo (41) en un signal de chrominance haute fréquence présentant une fréquence originale ;
un filtre peigne (48) pour ôter une composante non nécessaire du signal de chrominance haute fréquence en provenance dudit moyen de conversion en fréquence (46, 47, 51-54) ;
un moyen de circuit de boucle à verrouillage de phase (49, 50, 51) pour extraire un signal de burst du signal de chrominance haute fréquence en provenance dudit filtre peigne (48) afin de détecter une différence de phase entre le signal de burst et une sortie en provenance d'un oscillateur de référence (50) et pour verrouiller en phase le signal de burst avec la sortie en provenance dudit oscillateur de référence en contrôlant une porteuse de conversion utilisée dans ledit moyen de conversion en fréquence (46, 47, 51-54) sur la base de la différence de phase ;
caractérisé en ce que ledit appareil comprend en outre :
un moyen de génération d'information couleur (57) pour générer un signal d'information couleur en mélangeant de façon additive une première porteuse couleur en tant que sortie en provenance dudit oscillateur de référence (50) à une seconde porteuse couleur obtenue en déphasant la première porteuse couleur ;
un moyen de commutation (56) pour émettre en sortie de façon sélective le signal d'information couleur en provenance dudit moyen de génération d'information couleur (57) et le signal de chrominance haute fréquence en provenance dudit filtre peigne (48) en tant que signal de chrominance de reproduction ; et
un circuit de génération d'information supplémentaire (30) pour commander ledit moyen de commutation (56) afin de sélectionner le signal d'information couleur ou le signal de chrominance haute fréquence et afin d'insérer un signal supplémentaire de par exemple un caractère ou un motif graphique dans une partie du signal de chrominance de reproduction.
